# EUROPEAN PATENT APPLICATION

(11) **EP 3 772 856 A1**
(43) Date of publication of application: **10.02.2021**
(21) Application number: 19382684.9
(22) Date of filing: 05.08.2019
(51) Int. Cl.: H04N 21/439, H04N 21/44, H04N 21/234

(54) **IDENTIFICATION OF THE INTRO PART OF A VIDEO CONTENT**

(71) Applicant: Nokia Solutions and Networks Oy, 02610 Espoo (FI)
(72) Inventor: RUANO PUENTE, Jorge, 28050 Madrid (ES); CASAL MARTIN, Juan, 28050 Madrid (ES); NORTES NOLASCO, Alberto, 28050 Madrid (ES)
(74) Representative: Herrero & Asociados, S.L.

(57) **Abstract**

Apparatus and method for implementing identification of the intro segment of a video content (a TV show, series, movies...), using combined text and audio analysis. The proposed solution gives an accurate identification of the intro segment, combining the analysis of the number of text characters in the screen with the analysis of the audio in the video content. This is done without any previous training or any comparison with earlier analyzed episodes of the TV show, series....

## Description

### TECHNICAL FIELD

The present invention relates to the identification of a specific part of a media content and more particularly to an apparatus and method for an improved identification (detection) of the introductory part (usually known as "intro") of a TV Show or a movie or a series episode or, generally speaking, any video content.

### BACKGROUND

Nowadays, the video content streaming platforms allow that many video content consumers (users) watch several episodes of the same TV Show (or even the full season) one after the other. This practice is known as binge-watching. In this context, the intro parts of the episodes become irrelevant because they do not provide any new information to the consumer (particularly in TV shows where this part is duplicated in all episodes of the same TV show). That's why the applications of these streaming platforms offer the possibility of skipping this part and jump directly to the main content of the TV show.

So, there is a need of being able to accurately identify the temporal intervals that correspond to the intro and credits. Human operators are usually used to watch the content and get this information about the temporal location of intro and credits. However, this way of detecting the intro and credits requires a lot of time and cost, it is less accurate and it is sensible to mistakes from the human operator.

### SUMMARY

Prior art problems are generally solved or circumvented, and technical advantages are generally achieved, by the proposed embodiments which provide a method and an apparatus for implementing automatic identification of the introductory (intro) segment of a video content item (a TV show, series movies...) using combined frame text and audio analysis. The proposed solution combines the analysis of the amount of text (characters) on the screen with the analysis of the audio in the video content show.

In the embodiments of the proposed solution, the input will be the video content (for example an episode of the TV show) usually received as a video file (e.g. a digital video file); then it will be analyzed using text and audio recognition techniques; the output will be an accurate estimation (at a frame level) of when the intro starts and ends. In some embodiments, the same analysis will be applied to estimate not only the intro but also, when the credits part of the video content starts and ends. This will be done without any previous training or any comparison with earlier analyzed episodes (in other words, the automatic detection will be made without a previous training about the intro and the show of previous or future episodes).

According to a first aspect, an embodiment of an apparatus (to identify a time interval corresponding to the introductory part of the video content) comprises at least one processor; and at least one memory including computer program code; the at least one memory and the computer program code configured to, with the at least one processor, cause the apparatus at least to perform:
- Select, from the video content, an initial section, CS, consisting on the initial S% part of the video content, where S is a design parameter;
- Perform character detection in video frames of CS and select a video portion, CS1, within (of) CS with the highest number of characters based on the performed character detection in video frames;
- Perform audio analysis in the video portion CS1 and select a video sub-portion, CS2, within (of) CS1 with the longest interval of music, based on said performed audio analysis;
- Determine the first frame and last frame of CS2 where one or more characters have been detected and select a time intervals, CS3, as the part of CS2 between the first and the last frame of CS2 where one or more characters have been detected.

The proposed solution allows an automatic identification of the intro (and optionally the credits), as it is not made manually by an human operator, and it is made by an electronic apparatus without the need of any user interaction or information; that is, the apparatus receives the video content, performs the proposed steps (without the need of further information or user interaction) and, as a result, the apparatus provides the identification of the intro part of the video content.

In some embodiments, not only the intro of a video content but also a time interval CE3 corresponding to the end credit part (credits) of the video content is identified by the apparatus. In order to do that, in said embodiments,the at least one memory and the computer program code are further configured to, with the at least one processor, cause the apparatus to at least further perform:
Select, from the video content, a final section, CE, consisting on the initial E% part of the video content, where E is a design parameter;
Perform character detection in frames of CE and select a video portion, CE1, within CE, with the highest number of characters based on the performed character detection in frames;
Perform audio analysis in the video portion CE1 and select a video sub-portion, CE2, within CE1 with the longest interval of music based on said performed audio analysis; and
Determine the first frame and last frame of CE2 where one or more characters have been detected and select a time interval, CE3, as the part of CE2 between the first and the last frame of CE2 where one or more characters have been detected.

The character detection in frames and selection of the video portion(s) with the highest number of characters, may comprise:
Selecting, within each section CS and optionally CE (in the embodiments where the credits are also being identified), frames every certain period of time (i.e. frames from the video content separated a certain period of time); the frames may be selected with any period of time, for example 1 second, even, in an alternative embodiment, all the frames of each section could be selected.
Determining the number of characters in each selected frame by performing character detection;
Dividing each section in segments of duration d/L where d is the total duration of the video content and L is a design parameter, and assigning as number of characters of each segment, the sum of the number of characters of all the selected frames belonging to each segment;
In each section CS and optionally CE (if the credits are also being identified), selecting as the video portions with the highest number of characters CS1 and CE1 respectively, the segment with the highest number of characters in each section (highest segment), and all the contiguous segments whose number of characters assigned in the previous sub-step is higher than a certain first threshold.

In an embodiment, an additional segment is selected at the beginning and end of CS1 and optionally CE1.

The audio analysis may be performed based on the amplitude of the audio signal on the video portions CS1 and optionally CE1. For example, the longest sub-portions of CS1 and optionally CE1, whose audio signal amplitude is above a certain second threshold, may be selected as CS2 and CE2 respectively.

The audio analysis and selection of the video sub-portion(s) with the longest interval of music, may comprise:
Splitting each portion, CS1 and optionally CE1 (in the embodiments, where the credits are also being identified), in smaller segments of a certain duration (for example, 200 milliseconds);
Measuring the amplitude of the audio signal in each smaller segment and classifying a smaller segment as silence if the amplitude of the audio signal in it below the certain second threshold (silence threshold, for example, 30dbs below the average amplitude of the audio signal in the whole portion);
Selecting, as the video sub-portion with the longest interval of music, CS2 and optionally CE2, the longest sub-portion within CS1 and optionally CE1 respectively between two consecutive smaller segments classified as silence.

In an embodiment, the selection of CS3 and optionally CE3 further includes:
- measuring the duration of the part of the video content between the start of the video content and the start of CS3 and, if said duration is shorter than a certain third threshold (for example, 10 seconds), increasing the time interval CS3 selected to the start of the video content (so the start of CS3 is the start of the video content);
- if the credits are also being identified, measuring the duration of the part of the video content between the end of CE3 and the end of the video content and, if said duration is shorter than a certain fourth threshold (for example, 10 seconds), increasing the time interval selected CE3 to the end time of the video content (so the end of CE3 is the end of the video content).

In an embodiment, the apparatus further provides information (e.g. in a file or in a display of the apparatus) about the start and end times of the time intervals CS3 (and CE3 if the credits are also being identified), as the time intervals corresponding to the introductory part and the credits part respectively.

The video content file may be received through a telecommunications network.

The video content may be any video content item as for example an episode of a TV show or a series, a movie....

According to a second aspect, an embodiment of a computer implemented method is provided for identification of a time interval (CS3) corresponding to the introductory part (intro) of a video content (included in a video content file), said method comprising the following steps (performed by an electronic apparatus):
a) Selecting, from the video content, an initial video section, CS, consisting on the initial S% part of the video content where S is a design parameters (usually below 25 or 30);
b) Performing character detection in frames of CS and selecting a video portion, CS1, of CS with the highest number of characters based on the performed character detection in frames;
c) Performing audio analysis in the video portion CS1 and selecting a video sub-portion, CS2, of CS1 with the longest interval of music, based on said performed audio analysis;
d) Determining the first frame and last frame of CS2 where characters have been detected (that is, the first and last frame where the number of characters in said frame was not 0, based on the characters identification in video frames performed in step a)) and selecting a time interval, CS3, within CS2 based in said determination. More specifically, CS3 is selected as the part of CS2 between the first and the last frame of CS2 where one or more characters have been detected.

In some embodiments, not only the time interval corresponding to the intro of a video content but also a time interval CE3 corresponding to the end credit part (credits) of the video content is identified. In order to do that, in said embodiment, the method further comprises:
in step a) further selecting, from the video content, a final section, CE, consisting on the initial E% part of the video content, where E is a design parameter (usually below 25 or 30);
in step b) further performing character detection in frames of CE and selecting a video portion, CE1, within CE, with the highest number of characters based on the performed character detection in frames;
in step c) further performing audio analysis in the video portion CE1 and selecting a video sub-portion, CE2, within CE1 with the longest interval of music based on said performed audio analysis; and
in step d) further determining the first frame and last frame of CE2 where one or more characters have been detected and selecting a time interval, CE3, as the part of CE2 between the first and the last frame of CE2 where one or more characters have been detected.

According to another aspect of the invention, a computer program product is provided, comprising computer-executable instructions for performing any of the method previously disclosed, when the program is run on a computer and a non-transitory digital data storage medium is also provided encoding a machine-executable program of instructions to perform any of the methods disclosed.

Consequently, according to the invention a method, an apparatus and a computer program according to the independent claims are provided. Favourable embodiments are defined in the dependent claims. These and other aspects of the invention will be apparent from and elucidated with reference to the embodiments described hereinafter.

### BRIEF DESCRIPTION OF THE DRAWINGS

Some embodiments of the method and apparatus in accordance with embodiments of the present invention are now described, by way of example only, and with reference to the accompanying drawings, in which:
Figure 1 presents a flowchart of the proposed method for identification of the intro part of a video content, according to an embodiment of the invention.
Figure 2 is a graph showing the number of text elements for each frame in a particular example of the text analysis made according to an embodiment of the invention.
Figure 3 is a graph showing the number of text elements for every group of frames and how CS1 is selected, in a particular example of the text analysis made according to an embodiment of the invention.
Figure 4 is a graph showing the amplitude of the audio signal for each period of the time portion CS1 and how CS2 is selected, in a particular example of the audio analysis made according to an embodiment of the invention.
Figure 5 presents a flowchart of the proposed method for identification of the intro and credits part of a video content, according to an embodiment of the invention.
Figure 6 presents a schematic block diagram showing a possible application of the proposed device, according to an embodiment of the invention.

### DESCRIPTION OF EMBODIMENTS

The following embodiments propose methods and apparatuses that implement automatic identification of intro in a video content (any video content item as for example a movie, an episode of a series, any kind of TV show or any other video content item). As it will be later explained, this identification is made at a frame level, as it is made a frame by frame analysis of the video content in order to accurately identify the intro.

Even though the intro segment of a video content is a well known concept, for the sake of clarity, it will be defined hereby. The introductory segment (known as intro segment, intro part or simply intro) is the part of the TV show (or generally speaking video content item), where the content is not related with the rest of the show (so missing this part does not affect to the understanding of the content of the show) and is played in the initial part of the show (for example, in the first 20% of the show). This intro part of the video content is usually the same or similar across all the episodes of the same show (for example a series), and during this part are usually displayed the names of the cast and staff of the show (Director, Producer...) or other information about the show.

The apparatus (device) proposed in the embodiments can be any electronic device with computing (processing) capabilities (i.e. including an electronic processor); in order to get the video content from the video content provider, the apparatus may be in the video content provider premises or connected via any telecommunications network with the video content provider or with an intermediary node which stores the video content.

The apparatus proposed in the embodiments will get a video content (for example, an episode of a TV show) and without any training, the segment of the video content corresponding to the intro will be determined just with the information of the text in the screen and the analysis of the audio. In some embodiments, as it will be explained later, the credits segment will also be determined.

The input will usually be a video file including the video content to analyze. It can be encoded in MPEG2, MPEG 4, or any other known video format. The output can be in the form of identification of these segments or parts (the "intro" and, optionally, the credits) under different forms (for example an XML file or any other type of file, with information about when the intro starts and ends). As an implementation example, the apparatus output can be an XML file with just the intro start and end (and optionally also the credits start and end). In an embodiment, the output may be a file with the identification of the frames where the intro ends and starts (and optionally, the identification of the frames where the credits ends and starts). In an embodiment, the output may only contain the identification of the frame where the intro ends (and optionally the frame where the credits part starts) and in that case, it is supposed that the intro starts from the beginning of the video content (and the credits part lasts until the end of the video content).

In an embodiment, the TV provider (for example the video content streaming platforms) will further announce to the user (e.g. using a user equipment application) the possibility to skip the intro (in case the user wants to "binge watch" a series or a continuous set of different programs). In an embodiment, the apparatus can itself include an user application, to further announce to the user (through an user interface) the possibility to skip the intro (and the credits, if the credits are also identified). In case the user tells the apparatus to skip the intro and/or the credits, the apparatus can delete the part of the video content identified as intro and/or credits (based on the identification made by the apparatus) and provides as output the video content without the intro and/or the credits (removed according to the user request).

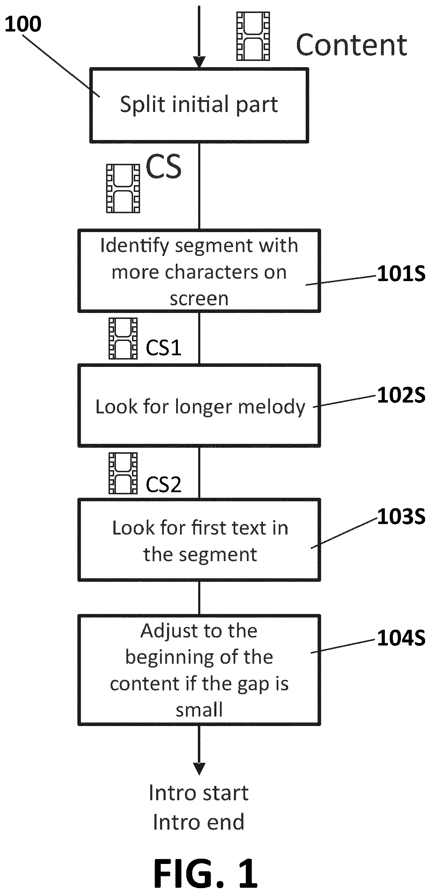

The proposed mechanism comprises the following main steps performed by the apparatus. Figure 1 presents a flowchart showing these steps for identification of the intro part of a video content, according to an embodiment of the invention:
- From the video content, a fragment or section will be split (100). This section will be an initial section (CS) of the content (where the intro will be located). This initial section will be used for the rest of the analysis.
- The video content in the initial section is decomposed in a succession of frames and it is done an analysis of the amount of text characters (writing symbols) that appears in each of the frames. To perform this analysis (i.e. to obtain the amount of characters) any known character identification (detection) technique can be used. The time portion (also called segment or part) of the split section CS of the video content with the highest amount of characters is selected (101S). This selection is done in the initial section of the video content (CS). With this analysis, the video portion (CS1) where it is more likely that intro (in the initial section) is, is identified.
- After that, it is identified within this portion selected in the previous step (CS1), the portion with the longest music segment (usually without voice), for example, the portion with the longest melody (102S). In this portion (CS2) of the video content, called sub-portion because it is a portion within another portion, the intro is located.
- Then, a fine-tuning step (103S) can be applied. In this step, in the portion selected in the previous step (CS2), it is identified where the first and last string of characters appears. With this last analysis, it is done the fine tuning of intro segment (CS3).
- Finally, a last optional improvement step can be applied (104S): If before the intro, there is a short part from the beginning of the show (of the video content), this short part is incorporated into the intro respectively, to avoid orphan small portions.

Now the steps will be explained in detail, according to specific embodiments of the invention (that is, now an optional way of implementing each step will be explained but with no limiting purposes, so the steps could be performed in other different ways).

The proposed technique starts with separating from the video content (step 100), a fragment to analyze, where the intro of the show can be placed. So, the video content of the file received, is split into an initial (Start) section (from now on it will be called CS) with the initial S% of the video content.

The value of S will be a design parameter and generally speaking it will be taken in a conservative way to be sure that the intro of the show is within CS. Preferably, S is below 30; in an embodiment S=20, however any other value of S could be taken.

This step is followed by a further refining process (steps 101-104) to accurately identify the intro segment. Usually, these steps are made as in parallel as possible in order to speed up the process.

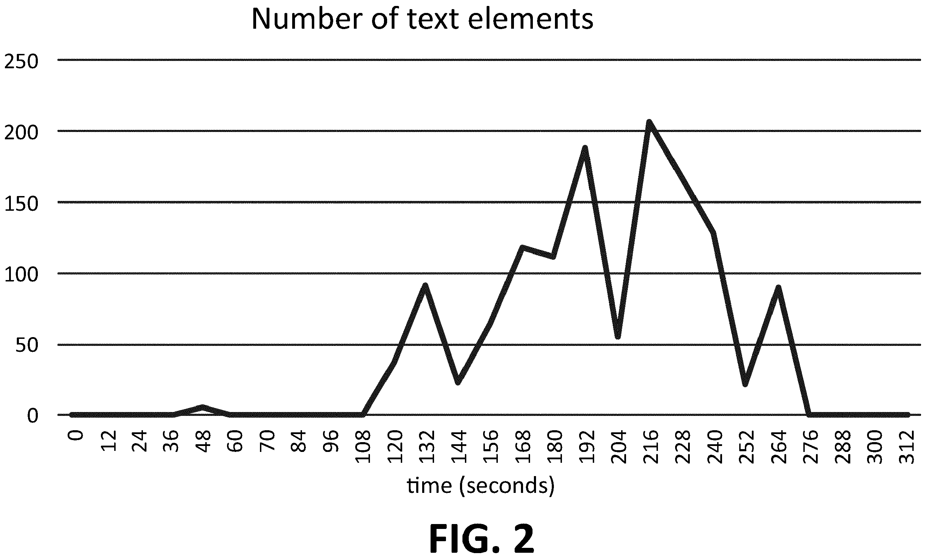

The refining process stars (steps 101S) with the analysis of the number of text characters that appears in the screen (using any known character detection technique) and then identify what is the portion with a higher concentration of text in CS. This analysis provides the portion where it is more likely to be placed the intro. In order to do that, the section CS is decomposed in video frames and, in an embodiment, the characters detected in each frame are counted. In an alternative embodiment, in order to reduce the computing workload (making the procedure faster and simpler), time periodic frames are selected (one frame per certain period of time, e.g. one frame per second) and the number of characters that appears in each of these selected (extracted) frames is measured (that is, only the characters in a frame every period of time is counted, instead of counting the characters in all the frames). The period of time selected for the periodic frames is a design option (it can be for example one second, or 0.5 seconds, but any other period may be selected). This is shown in figure 2. In this graph, the amount of text elements (characters) for each periodic frame is shown (in figure 2, a period of one second is used for selecting the frames where the number of characters is counted).

The CS section is divided in segments of a certain duration; for example, if d is the total duration of the video content in seconds, the sections are divided in time segments that last d/50 seconds (this is only an example, and any other size of segments can be used); then the number of characters of the periodic frames belonging to each segment are summed and the segment with the highest number of characters in the section CS is selected. From this selected segment, all the segments contiguous between them (at both sides) having more than a threshold of characters, are selected (in an embodiment this threshold is 20 but any other value can be used). In other words, the first segment (before the segment with the highest number of characters) having less than a threshold of characters and the first segment (after the segment with the highest number of characters) having less than a threshold of characters, are identified; and all the segments between these identified segments are selected (that is, all the contiguous segments having more than the threshold of characters). In an embodiment, an additional segment at the beginning and another at the end of the selected segments are added (that is, said identified segments are included in the selection).

This way it is selected a portion (a group of contiguous segments) of the video content section CS (from now on called CS1), much smaller than the original portion CS. This time portion (CS1) will be the portion with highest probability to contain the intro (CS1).

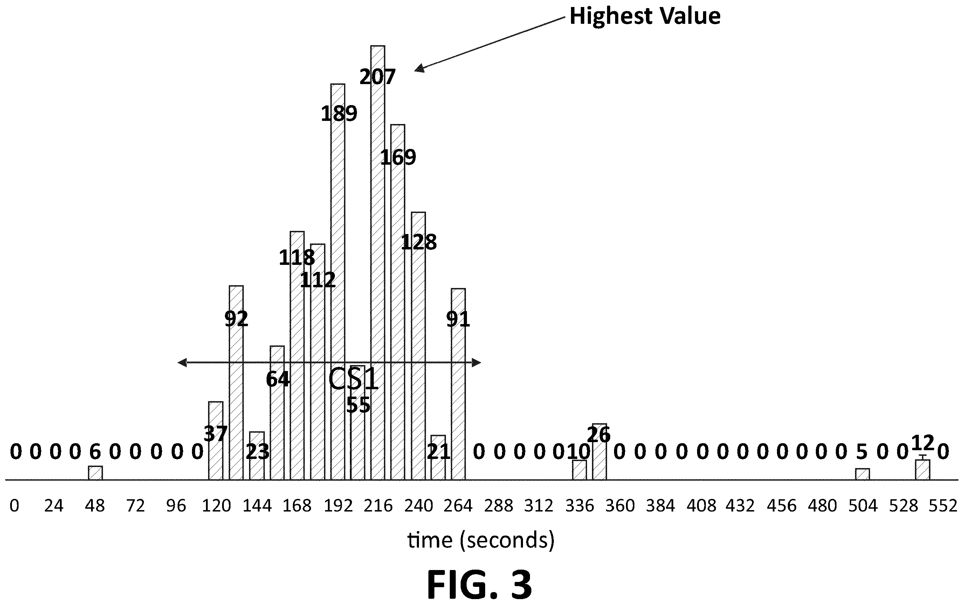

This selection (grouping) algorithm for the CS section, is shown in figure 3 for a particular example. In this graph, it is represented the number of text elements (characters) in each period of CS. In this graph, it is also shown which portion CS1 is selected. In the specific example shown in figure 3, it is supposed that the duration of the video content is 600 seconds, the segment duration is 600/50=12 seconds, and one frame per second is selected to detect and count the numbers of characters; so in each segment 12 frames are selected and the number of character is said frames are counted and summed (this is only an example, and of course other durations and periods can be used).

The next step of the process (steps 102S) is the analysis of the audio, more specifically the search of a melody (music) in the portion selected in the previous step (CS1). The audio in the portion will be identified and the period where there is music in the portion will be marked.

The identification of the music may be done using several techniques. In an embodiment, said music detection is done using the amplitude of the signal. In a voice signal there are frequent periods where the amplitude is zero, and this does not happen in the signal periods containing music.

In an embodiment, this audio analysis is performed in the following way: Each selected portion (CS1) is split in smaller sub-segments or pieces (for example, of 200 milliseconds even though any other value can be used) and the amplitude of the signal is measured in each sub-segment; then if the amplitude of the signal is below a certain threshold, called silence threshold (for example, 30 dB less than the amplitude average of the whole portion), said sub-segment will be computed (marked) as silence. The longest non-silence portion (group of contiguous sub-segments not marked as silence) in CS1 will be marked as the sub-portion with music. That is, from all the sub-portions of CS1 between two consecutive sub-segments marked as silence, the sub-portion that lasts more time will be marked as the sub-portion of CS1 including the melody/music of the intro (from now on called CS2). Hence, the audio analysis will result in the selection of one sub-portion CS2, which is the sub-portion with the highest probability to contain the intro. In other words, the longest period in CS1 portion with music will be considered as the part of the video content with the intro.

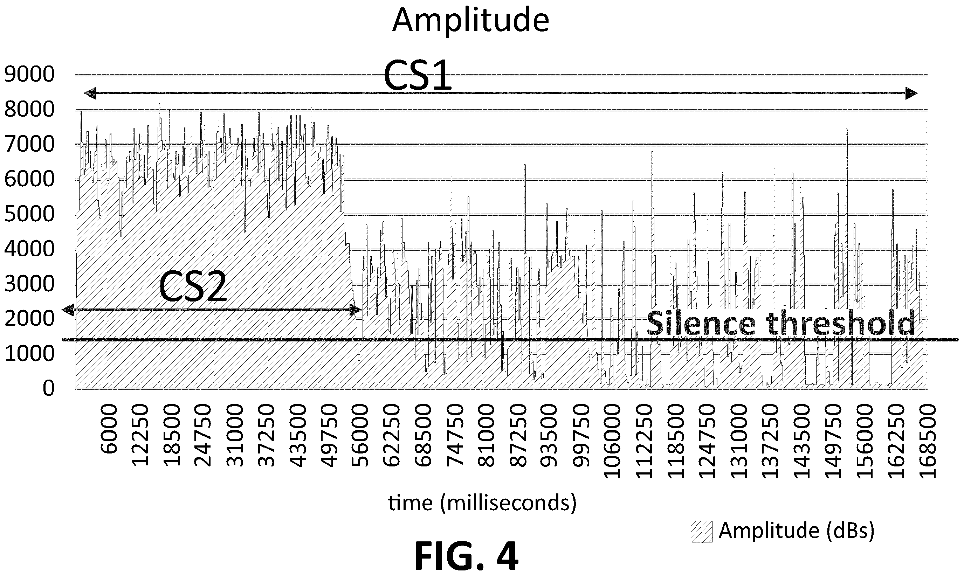

This audio analysis selection for the CS1 portion is shown in figure 4 for a particular example. In this graph, it is represented the amplitude of each sub-segment of CS1, and it is also shown which portion CS2 is selected (the longest portion between two consecutive sub-segments marked as silence, because they are below the silence threshold).

The result of this second step (the sub-portion CS2) provides a quite accurate result of the time location of the intro. However, there is an additional improvement (step 103S) that may be applied considering that it is important not to remove any significant part of the real show (not belonging to the intro). In order to do that, this additional improvement comprises in a fine-tuning of the interval considering that the non-significant part (the intro) will start and end only with text on the screen. So, the intro sub-portion selected in the previous step (CS2) will be trimmed using this criteria; the resulting final sub-portions will be called CS3. This way, it is made sure that no significant part of the video content is included in the intro.

In order to do so, in an embodiment, the following mechanism is performed: In the previous text analysis step, the number of characters in selected frames of the sections CS were obtained; so, the number of characters in each (periodic) selected frame in the sub-portion CS2 are available (as CS2 is a sub-portion of CS). For this sub-portion (CS2), it is then determined the first frame and last frame (from the selected frames whose number of characters was obtained in the previous text analysis step) of the sub-portion where text appears (i.e. the number of characters is >0) and the part of CS2 before said first frame and after said last frame is trimmed. That is, a smaller sub-portion (CS3) is selected corresponding to the part of CS2 between the first and the last frame where characters have been detected.

Finally, a last refining technique may be applied (steps 104S). This final part of the proposed mechanism, tries to avoid the creation of very small segments between the start of the video content and the beginning of the part identified as the intro part. In order to do that, it can be established, that if the video content segment between the start of the video content and the beginning of the part identified as the intro (e.g. CS3) is shorter than a certain threshold (for example, 10 seconds but any other value can be used), then it is incorporated to the intro part (that is it is considered as belonging to the intro part).

In the previous paragraphs, several embodiments have been explained to identification of the intro part of the video content. However, some embodiments will be proposed now, where not only the intro part but also the credits part of the video content is identified.

The credits part or segment (known as end credits or simply as credits) is a well known concept. The credits part is the part of the TV show (or generally speaking video content) where the content is not related with the rest of the show (so missing this part does not affect to the understanding of the content of the show) and is played in the last part of the show (for example, in the last 15% of the show). This part of the video content is usually the same or similar across all the episodes of the same show (for example a series), and during this part the names of the cast and staff of the show (Director, Producer...) or other information about the show are usually displayed.

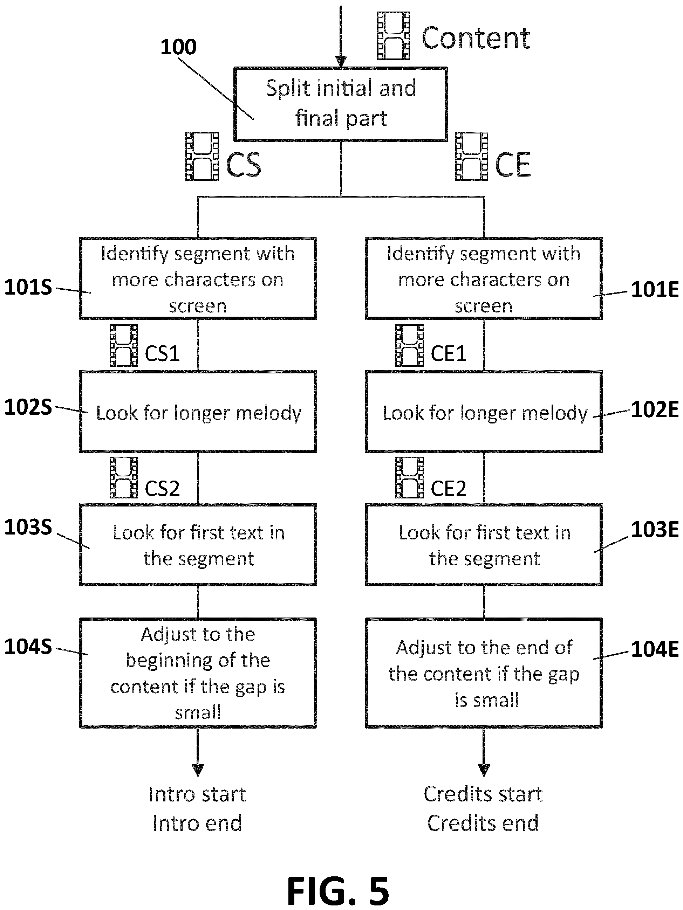

In these embodiments, in which not only the intro but also the credits are identified, the proposed mechanism would comprise the following main steps performed by the apparatus. Figure 5 presents a flowchart showing these steps for identification of the intro and credits part of a video content, according to an embodiment of the invention:
- The video content is split (100) in three fragments or sections: The initial section (CS) of the content (where the intro will be located), the last section (from now on it will be called CE) of the content (where the credits will be located), and other with the rest of the content that will not be used for the analysis. So, the video content of the file received, is split into an initial (Start) section (S) with the initial S% of the video content and a last (End) section with the last E% of the video content that we will call CE, and other with the rest of the content (that will not be used for this analysis). The value of S and E will be design parameters and generally speaking they will be taken in a conservative way to be sure that the intro and the credits of the show are within CS and CE sections respectively. Preferably, S and E are below 30; in an embodiment S=20 or 25 and E=15 or 20, however any other values of S and E could be taken.
- The video content in the initial and final sections (CS and CE respectively) is decomposed in a succession of frames and it is done an analysis of the amount of text characters (writing symbols) that appears in each of the frames. To perform this analysis (i.e. to obtain the amount of characters) any known character identification (detection) technique can be used. The time portions (also called segments or parts) of each section of the video content with the highest amounts of characters are selected (101S, 101E). This selection is done in the initial section of the video content for the intro and in the last section of the video content (for the credits). With this analysis, the video portions (CS1, CE1) where it is more likely that intro (in the initial section) and credits (last section) are, are identified.

The selection of CS1 has already been explained (step 101S). The selection of the video portion CE1 with the highest amount of characters (101E), will be done exactly in the same way as explained before for obtaining CS1. That is, the same actions (previously explained) made to obtain the portion CS1 from CS, will be made also to obtain the portion CE1 from CE.
- After that, it is identified within these two portions selected in the previous step (CS1, CE1), the portion with the longest music segment (usually without voice), for example, the portion with the longest melody (102S, 102E). In these portions (CS2, CE2) of the video content, the intro and credits respectively are located. The selection of the video portion CE2 with the longest melody (102E), will be done exactly in the same way as explained before for obtaining CS2 (step 102S). That is, the same actions (previously explained) made to obtain CS2 from CS1, will be made to obtain CE2 from CE.
- Then, a fine-tuning step (103S, 103E) is applied. In this step, in the sub-portions selected in the previous step (CS2, CE2), it is identified where the first and last string of characters appears and these sub-portions are appropriately trimmed. In order to do so, as it has been previously explained for the intro (CS3), for each of these sub-portions (CS2 and CE2), it is determined the first frame and last frame (from the selected frames whose number of characters was obtained in the previous text analysis step) of the sub-portion where text appears (the number of characters is >0) and the part of CS2 and CE2 before said first frame and after said last frame are trimmed. That is, smaller intervals CS3, CE3 are selected corresponding to the part of CS2, CE2 respectively between the first and the last frame where characters have been detected. With this last analysis, it is done the fine tuning of intro and credits segments (CS3, CE3).
- Finally, a last optional improvement step can be applied (104S, 104E): If before the intro or after the credits, there are short parts from the beginning or to the end of the show, these parts are incorporated into the intro and credits respectively, to avoid orphan small portions. This step has been previously explained for the intro (104S), and the same will be done for the credits (104E). In order to do so, if the video content segment between the end of the part identified as the credits (e.g. CE3) and the end of the video content is shorter than a certain threshold (for example, 10 seconds but any other value can be used), then it is incorporated to the credits part (that is it is considered as belonging to the credits part).

That is, in these embodiments, the same steps explained to identify the intro will be also made to identify the credits part. The only difference is that instead of performing said steps in an initial section of the video content (CS), they will be applied in a final section of the video content (CE).

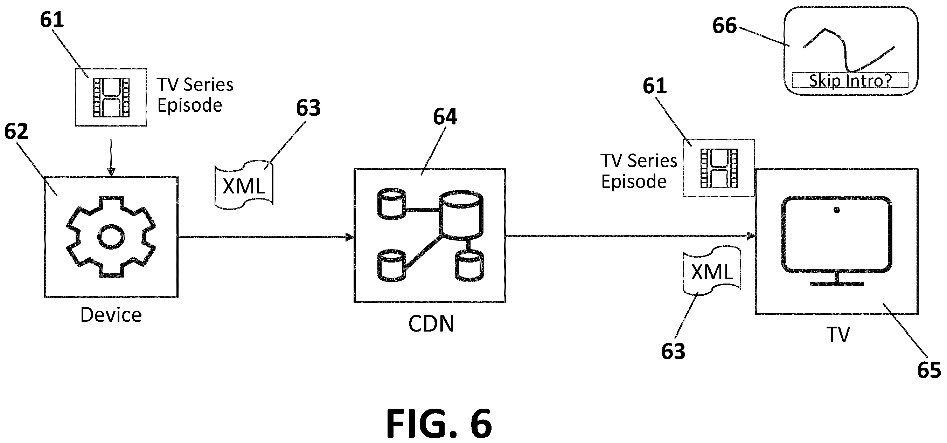

The embodiments proposed in this specification allow for example, to automatic tag the intro (and optionally also the credits) of the TV shows of a TV provider (for example, an streaming platform).This is shown in figure 6, where it is presented a block diagram with a possible application of the proposed solution. As it can be seen in figure 6, the TV provider will provide a video content (for example a TV series episode 61) to the apparatus (62) proposed in the present specification. The apparatus (62), applying the mechanism disclosed hereby, will provide a file (for example a XML file 63) including the start and end times of the intro (and optionally credits part) of the episode (61). In the example shown in figure 5, the apparatus (62) will provide the information to a content delivery network (64) which delivers the video content (61) to the user equipment (65) together with this XML file (63). The TV provider (for example, through an application in the user equipment) may, for example, propose to the user skip the intro and/or the credits (66) and continue watching the show without meaningless sections. The apparatus will be very useful for the TV provider as they are probably now doing manual tagging of the intro and credits of the content, that is costly, slow and not accurate (human errors).

Summarizing, the embodiments proposed in the present specification above will provide an automatic mechanism to detect at least the intro in a video content in an accurate and resource-saving way. The proposed embodiments will overcome (or at least minimize), the typical problems of automatic identification of the intervals of intro in a TV show, as for example:
- The use of image recognition is not good enough to identify the intro segment, as there is no any image, text or audio pattern that identifies most of the intros. In other words, generally speaking, the problem for the recognition of the intro is that TV shows intros offer a great variety in its structure, so there is no standard structure for this part of the video content. Some of them are fixed in music in appearance, as a part of the show with the names of the cast and other participants on the screen, a very well-defined melody and always the same video characterized by many scene changes and no story development. But this structure is not maintained in many cases. In some cases, the intro is different every time, in some others the names in the screen are kept for a few seconds after the intro is finished and are shown while the action of the show has started.
- The use of text recognition only, using for example known techniques as OCR (Optical Character Recognition), can be a possible solution if looking for some sentences that normally appear in all intros (as "Produced By" or "Director") or credits but it does not provide a complete and accurate mechanism due to two main reasons: 1) OCR programs designed for working in a black & white environment with type writing letters, are not successful when they are applied to identify the text present in many TV Shows as they use a very rich and degraded backgrounds, artistic fonts and are usually very blur. 2) In many cases, the text continues appearing in the screen mixed with the main video content (once the intro has finished). A requirement for the automatic identification algorithm is to avoid any "false positive" that wrongly identifies (and optionally removes) a main part of the show as belonging to the "intro" part of the show.
- Solutions based only on audio analysis (comparing the real intro melody of the TV show with the audio of the video content, in order to identify the intro), are not accurate and, moreover, they would require a previous analysis of an episode of the show.

The presented embodiments may be embodied in other specific apparatuses, systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope

A person of skill in the art would readily recognize that steps of various above-described methods can be performed by programmed computers. Herein, some embodiments are also intended to cover program storage apparatuses, e.g., digital data storage media, which are machine or computer readable and encode machine-executable or computer-executable programs of instructions, wherein said instructions perform some or all of the steps of said above-described methods. The program storage apparatuses may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments, as well as specific examples thereof, are intended to encompass equivalents thereof.

The functions of the various elements shown in the figures, including any functional blocks titled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Apparatus comprising at least one processor; and at least one memory including computer program code; the at least one memory and the computer program code configured to, with the at least one processor, cause the device at least to perform:
- Select, from the video content, an initial section, CS, consisting on the initial S% part of the video content, where S is a design parameter;
- Perform character detection in frames of CS and select a video portion, CS1, within CS with the highest number of characters based on the performed character detection in frames;
- Perform audio analysis in the video portion CS1 and select a video sub-portion, CS2, within CS1 with the longest interval of music, based on said performed audio analysis;
- Determine the first frame and last frame of CS2 where one or more characters have been detected and select time interval, CS3, as the part of CS2 between the first and the last frame of CS2 where one or more characters have been detected.

2. Apparatus according to claim 1, wherein the at least one memory and the computer program code are further configured to, with the at least one processor, cause the apparatus to perform the character detection in frames and selection of the video portion CS1 by:
- Selecting, within section CS, frames every certain period of time;
- Determining the number of characters in each selected frame by performing character detection;
- Dividing the section in segments of duration d/L where d is the total duration of the video content and L is a design parameter, and assigning as number of characters of each segment, the sum of the number of characters of all the selected frames belonging to each segment;
- In section CS, selecting as the video portions with the highest number of characters CS1, the segment with the highest number of characters in section CS, and all the contiguous segments whose number of characters assigned is higher than a certain first threshold.

3. Apparatus according to claim 2, wherein the at least one memory and the computer program code are further configured to, with the at least one processor, cause the apparatus to perform the character detection in frames and selection of the video portion CS1 by further adding to the video portion CS1, the first segment before the beginning of the obtained video portion CS1 and the first segment after the end of the obtained video portion CS1.

4. Apparatus according to any of the previous claims wherein the at least one memory and the computer program code are further configured to, with the at least one processor, cause the apparatus to perform the audio analysis using the amplitude of the audio signal on the video portion CS1.

5. Apparatus according to claim 4 wherein the at least one memory and the computer program code are further configured to, with the at least one processor, cause the apparatus to perform selecting CS2 as the longest sub-portion of CS1, whose audio signal amplitude is above a certain second threshold.

6. Apparatus according to any of the previous claims, wherein the at least one memory and the computer program code are further configured to, with the at least one processor, cause the apparatus to perform the audio analysis and selection of video sub-portion CS2 by:
- Splitting CS1 in smaller segments of a certain duration;
- Measuring the amplitude of the audio signal in each smaller segment and classifying a smaller segment as silence if the amplitude of the audio signal in it is below a certain second threshold;
- Selecting, as the video sub-portion with the longest interval of music, CS2, the longest sub-portion within CS1 between two consecutive smaller segments classified as silence.

7. Apparatus according to any of the claims 5-6 where the second threshold is 30dbs below the average amplitude of the audio signal in the whole video portion.

8. Apparatus according to any of the previous claims, wherein the at least one memory and the computer program code are further configured to, with the at least one processor, cause the apparatus to at least further perform:
- measuring the duration of the part of the video content between the start of the video content and the start of CS3 and, if said duration is shorter than a certain third threshold, taking as the beginning of the time interval CS3, the start of the video content.

9. Apparatus according to claim 8 wherein the third threshold is 10 seconds.

10. Apparatus according to any of the previous claims wherein the at least one memory and the computer program code are further configured to, with the at least one processor, cause the apparatus to at least further perform receiving the video content file from a server via a telecommunications network.

11. Apparatus according to any of the previous claims wherein the video content is an episode of a TV show or series.

12. Apparatus according to any of the previous claims, wherein the at least one memory and the computer program code are further configured to, with the at least one processor, cause the apparatus to at least further perform identifying a time interval corresponding to the credits part of the video content by:
- Selecting, from the video content, a final section, CE, consisting on the initial E% part of the video content, where E is a design parameter;
- Performing character detection in frames of CE and select a video portion, CE1, within CE, with the highest number of characters based on the performed character detection in frames;
- Performing audio analysis in the video portion CE1 and selecting a video sub-portion, CE2, within CE1 with the longest interval of music based on said performed audio analysis; and
- Determining the first frame and last frame of CE2 where one or more characters have been detected and select a time interval, CE3, as the part of CE2 between the first and the last frame of CE2 where one or more characters have been detected.

13. A computer implemented method for identification of a time interval corresponding to the introductory part of a video content, said method comprising the following steps:
a) Selecting, from the video content, an initial section, CS, consisting on the initial S% part of the video content, where S is a design parameter;
b) Performing character detection in frames of CS and selecting a video portion, CS1, within CS, with the highest number of characters based on the performed character detection in frames;
c) Performing audio analysis in the video portion CS1 and selecting a video sub-portion, CS2, within CS1 with the longest interval of music based on said performed audio analysis;
d) Determining the first frame and last frame of CS2 where one or more characters have been detected and selecting a time interval, CS3, as the part of CS2 between the first and the last frame of CS2 where one or more characters have been detected.

14. A method according to claim 13, where a time interval corresponding to the credits part of the video content is also identified, where the method further comprises:
In step a) further selecting, from the video content, a final section, CE, consisting on the initial E% part of the video content, where E is a design parameter;
In step b) further performing character detection in frames of CE and selecting a video portion, CE1, within CE, with the highest number of characters based on the performed character detection in frames;
In step c) further performing audio analysis in the video portion CE1 and selecting a video sub-portion, CE2, within CE1 with the longest interval of music based on said performed audio analysis; and
In step d) further determining the first frame and last frame of CE2 where one or more characters have been detected and selecting a time interval, CE3, as the part of CE2 between the first and the last frame of CE2 where one or more characters have been detected.

15. A non-transitory digital data storage medium storing a computer program comprising instructions causing a computer executing the program to perform all steps of a method according to any of claims 13-14.
